# EUROPÄISCHE PATENTANMELDUNG

(11) **EP 1 308 359 A2**
(43) Veröffentlichungstag der Anmeldung: **07.05.2003**
(21) Anmeldenummer: 02018050.1
(22) Anmeldetag: 13.08.2002
(51) Int. Cl.: B60T 10/02

(54) **Hydrodynamischer Retarder**

(30) Priorität: 16.08.2001 DE 10140220
(71) Anmelder: ZF FRIEDRICHSHAFEN AG, 88038 Friedrichshafen (DE)
(72) Erfinder: Sauter, Frank, 88074 Meckenbeuren (DE); Schöllhorn, Roland, 88048 Friedrichshafen (DE)

(57) **Zusammenfassung**

Der hydrodynamische Retarder für ein Kraftfahrzeug mit einem Kreislauf zur Steuerung des Retarders (1), der eine Hydraulikpumpe (10), einen Wärmetauscher (3), ein Einlassventil (4), ein Auslassventil (5) und eine Steuer- und Regeleinheit (6) enthält, ist derart ausgebildet, dass die Hydraulikpumpe (10) durch einen Elektromotor (2) antreibbar ist.

## Beschreibung

Die vorliegende Erfindung betrifft einen hydrodynamischen Retarder einer Bremsanlage für ein Kraftfahrzeug gemäß dem Oberbegriff des Patentanspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einer sich im Leistungsfluß befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Ein Beispiel einer Bremsanlage mit einem hydrodynamischen Retarder ist in der DE-C-198 53 830 beschrieben. Der hydrodynamische Retarder weist dabei einen Rotor und einen Stator auf, die ihrerseits einen Arbeitsraum miteinander bilden sowie eine Kühleinrichtung zum Kühlen des Arbeitsmediums, einen Vorratsbehälter zur Aufnahme des Arbeitsmediums und eine Steuereinrichtung zum Aufbringen eines Druckes auf das im Vorratsbehälter enthaltene Arbeitsmedium zwecks Einstellens des Kühlungsgrades des Arbeitsraumes, wobei Retarder und Kühleinrichtung im Bremsbetrieb in Sinne eines Kreislaufes vom Arbeitsmedium durchströmt werden. Das gesamte im Vorratsbehälter enthaltene Arbeitsmedium wird zur besseren Wärmeabfuhr in den Kreislauf eingebracht, wobei der Vorratsbehälter als Bestandteil des Kreislaufes durchströmt wird. Damit wird erreicht, dass sich das Arbeitsmedium aufgrund der nunmehr größeren aktiven Menge langsamer erwärmt, da die im Vorratsbehälter verbleibende Menge des Arbeitsmediums, die bis zu 50% der Gesamtölmenge betragen kann, zur Wärmeabfuhr mit herangezogen wird.

Zur Steuerung werden bei Retardern nach dem Stand der Technik im wesentlichen zwei verschiedene Prinzipien angewandt. Zum einen werden Steuerungen eingesetzt, bei denen der hydraulische Druck durch eine permanent angetriebene Hydraulikpumpe, bevorzugterweise eine Zahnradpumpe, bereitgestellt wird. Nachteilig ist bei diesem Konzept der drehzahlabhängige Volumenstrom der verwendeten Pumpe, was insbesondere bei niedrigen Drehzahlen einen Befüllspeicher und bei hohen Drehzahlen große Ventil- und Strömungsquerschnitte erforderlich macht.

Zum anderen werden pneumatische Steuerungssysteme eingesetzt, bei denen der Regeldruck durch einen Luftdruck direkt auf den Ölspiegel eingestellt wird. Nachteilig ist hier das begrenzte Regelverhalten und die Notwendigkeit einer Öl-Luft-Trennungseinheit sowie das Vorhandensein einer fahrzeugseitigen Pneumatikversorgung.

Der vorliegenden Erfindung liegt die Aufgabe zugrunde, einen hydrodynamischen Retarder der eingangs genannten Art anzugeben, welcher mit einem sehr einfachen Aufbau und technischen Aufwand eine einfache Steuerung des Retarders und eine ideale Dimensionierung von Pumpe und Filter ermöglicht.

Zudem sollen die Leerlaufverluste möglichst reduziert werden.

Ein weiteres Ziel der vorliegenden Erfindung ist es, eine sehr kurze Ansprechzeit bei Befüllung und Entleerung des Retarderkreislaufes zu erreichen, um so eine optimale Funktionalität auch bei kurzfristig aufeinanderfolgenden Bremsungen zu gewährleisten.

Desweiteren soll ein Verfahren zur Steuerung eines Retarders und insbesondere des erfindungsgemäßen Retarders angegeben werden.

Diese Aufgabe wird durch die Merkmale des kennzeichnenden Teils des Patentanspruchs 1 gelöst. Das Verfahren zur Steuerung eines Retarders ist Gegenstand des Patentanspruchs 15. Weitere Ausgestaltungen gehen aus den entsprechenden Unteransprüchen hervor.

Demnach wird vorgeschlagen, zur Betreiben eines Retarders eine Hydraulikpumpe einzusetzen, die von einem regelbaren Elektromotor angetrieben wird.

Zu diesem Zweck ist ein Hauptkreislauf erforderlich, der den Retarder, einen Wärmetauscher, eine Steuer- und Regeleinheit 6 und zwei Rückschlagventile (Ein-/Auslassventil) umfasst.

Die Pumpe wird erfindungsgemäß durch den regelbaren Elektromotor angetrieben und saugt das Bremsmedium, vorzugsweise Öl, aus dem Sumpf an, wobei vorteilhafterweise ein Filter vorgeschaltet ist, und fördert es an einer Stelle in den Hauptkreislauf. An einer anderen Stelle des Kreislaufs und vorteilhafterweise auslassseitig wird über einen Druckregler der Retarderregeldruck eingestellt. Durch die gegenüberliegende Anordnung von Pumpe und Regelventil kann im Nichtbremsbetrieb eine bestimmte Menge Bremsmedium durch den Wärmetauscher gefördert werden, ohne dass der Retarder anspricht. Eine Nachkühlung des Bremsmediums ist somit möglich.

Im Rahmen der Erfindung wird das Bremsmedium von der Pumpe an einer Stelle zwischen den Wärmetauscher und das Einlassventil gefördert, wobei weitere Stellen denkbar sind.

Die Retardersteuerung kann hierbei sowohl über den Elektromotor in Kombination mit einem Schaltventil, als auch in Kombination mit dem Regelventil erfolgen. Des weiteren ist am Retarderauslass ein Ventil vorgesehen, das eine vollständige Entleerung des Retarders im Nichtbremsbetrieb zulässt.

Im Rahmen einer Variante der vorliegenden Erfindung ist dieses Ventil mit dem Auslassventil kombiniert und zu einer Einheit zusammengefasst.

Im Rahmen einer weiteren Ausführungsform der Erfindung ist zwischen Torusraum und dem Retardersumpf eine Leckagebohrung vorgesehen, die für eine vollständige Entleerung des Retarderraums sorgt.

Im folgenden wird die Erfindung anhand der beigefügten Zeichnung näher erläutert. In dieser stellen dar:
- Fig. 1: eine schematische Ansicht des Kreislaufs zur Steuerung des Retarders sowie der benötigten Elemente gemäß einer ersten Ausführungsform der vorliegenden Erfindung;
- Fig. 2: eine schematische Ansicht des Kreislaufs zur Steuerung des Retarders sowie der benötigten Elemente gemäß einer zweiten Ausführungsform der vorliegenden Erfindung, wonach die Regelung ausschließlich über den Elektromotor erfolgt und
- Fig. 3: eine schematische Ansicht des Kreislaufs zur Steuerung des Retarders sowie der benötigten Elemente gemäß einer dritten Ausführungsform der vorliegenden Erfindung, bei der Ein- und Auslassventil mit dem Entleerventil zu einem Ventil kombiniert sind.

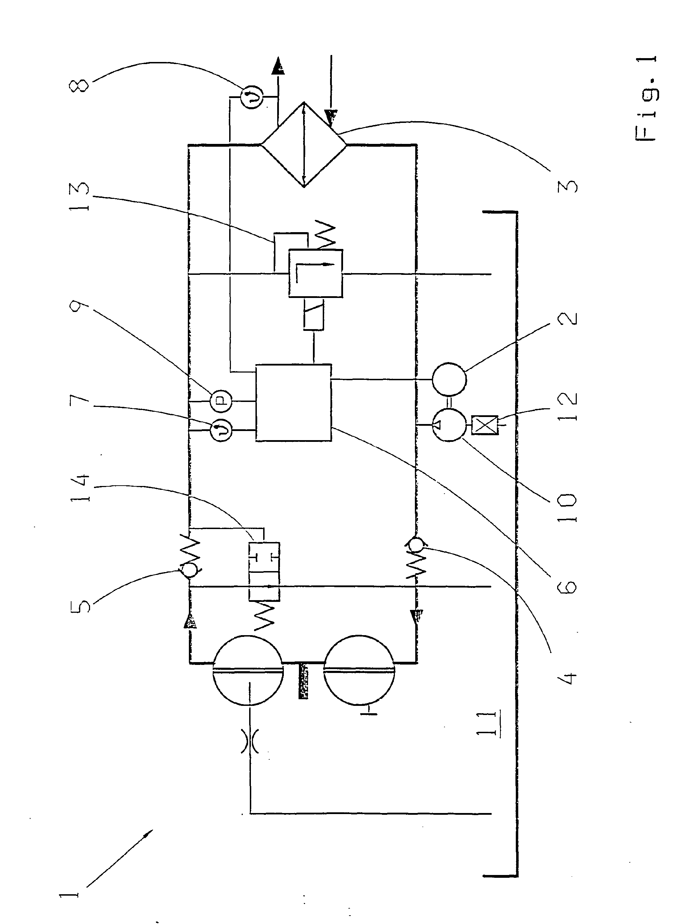

Gemäß Fig. 1 weist der hydrodynamische Retarder 1 einen regelbaren Elektromotor 2 auf. Des weiteren umfasst der Hauptkreislauf einen Wärmetauscher 3 und zwei Rückschlagventile, die als Einlass- bzw. Auslassventil 4, 5 ausgebildet sind. Ferner ist eine Steuer- und Regeleinheit 6 vorgesehen, die mit Temperatursensoren für die Temperatur θ 7, 8 verbunden ist, um die Temperatur im Fahrzeugkühlsystem und den Viskositätseinfluß bzw. Temperatureinfluss des Bremsmediums zu überwachen. Des weiteren ist im Retarderkreislauf ein Drucksensor 9 zur Überwachung des Regeldrucks p vorgesehen. Die Steuer- und Regeleinheit 6 ist vorteilhafterweise mit dem CAN (Controller Area Network) verbunden.

Die von dem mit der Steuer- und Regeleinheit 6 verbundenen Elektromotor 2 angetriebene Pumpe 10 saugt das Bremsmedium aus dem Sumpf 11. Zur besseren Funktionsweise ist ein Filter 12 vorgeschaltet. Das Bremsmedium wird an einer Stelle in den Hauptkreislauf gefördert, die vorzugsweise zwischen dem Wärmetauscher 3 und dem Einlassventil 4 vorgesehen ist. Der Retarderregeldruck wird über einen Druckregler 13 auslassseitig oder einlassseitig eingestellt; gezeigt ist die Variante, wonach die Druckregelung auslassseitig erfolgt. Durch die auf diese Weise entstehende gegenüberliegende Anordnung von Pumpe 10 und Regelventil 13 kann im Nichtbremsbetrieb eine bestimmte Menge Bremsmedium durch den Wärmetauscher 3 gefördert werden, ohne dass der Retarder anspricht, wodurch eine Nachkühlung des Bremsmediums ermöglicht wird.

Mit dem Bezugszeichen 14 ist ein Entleerventil gezeigt, das am Retarderauslass vorgesehen ist, wodurch eine vollständige Entleerung des Retarders im Nichtbremsbetrieb ermöglicht wird.

Die Retardersteuerung für die in Fig. 1 gezeigte Anordnung kann erfindungsgemäß sowohl über den Elektromotor 2, als auch über das Regelventil 13 oder in Kombination von Elektromotor und Regelventil erfolgen.

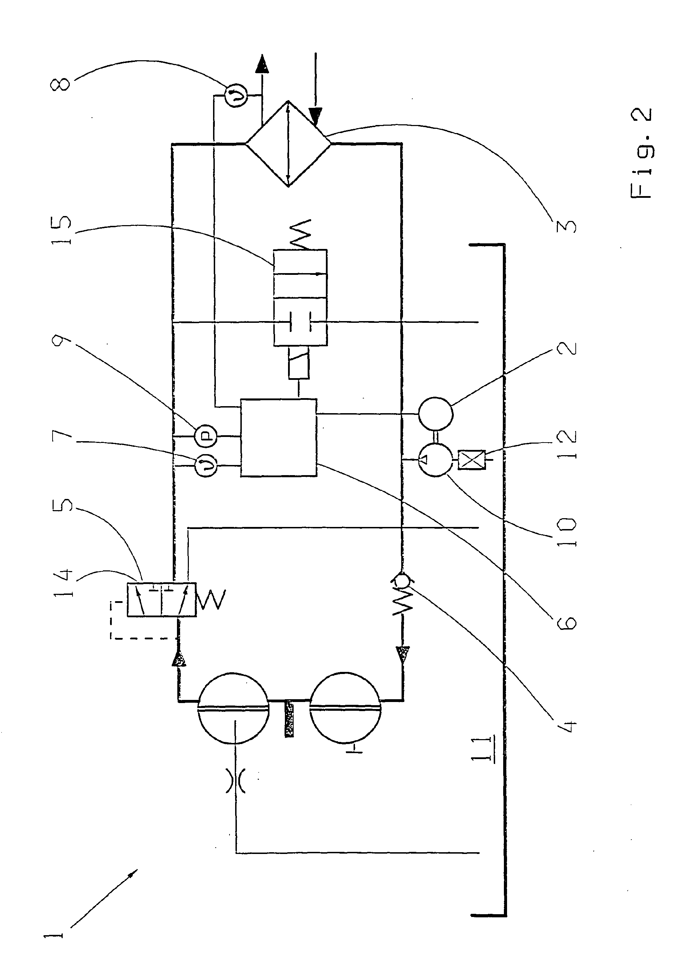

Fig. 2 zeigt die Retardersteuerung für den Fall, dass die Regelung ausschließlich über den Elektromotor 2 erfolgt. Zur optionalen redundanten Abschaltung des Retarders ist ein 2/2 Wegeventil 15 als Schaltventil vorgesehen. In Fig. 2 ist zudem eine vorteilhafte Ausgestaltung der Ventilanordnung gezeigt: Das Entleerventil 14 ist mit dem Auslassventil 5 zu einer Einheit zusammengefasst.

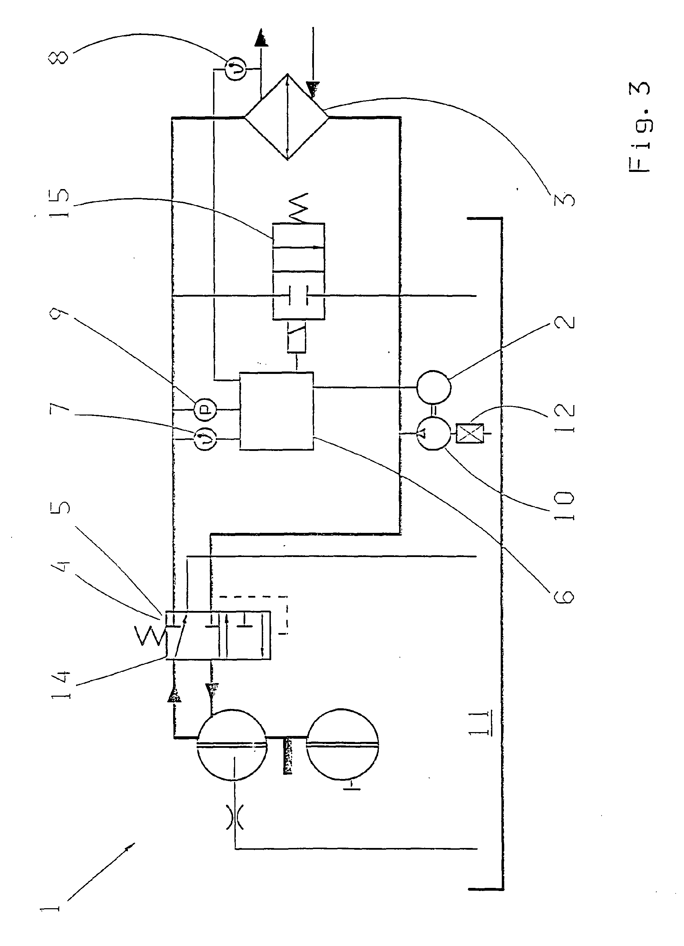

Fig. 3 zeigt ein weiteres Ausführungsbeispiel der Erfindung, bei dem Einlassventil 4, Auslassventil 5 und Entleerventil 14 eine Einheit bilden.

Gemäß einer weiteren, nicht dargestellten Ausführungsform können die verwendeten Sensoren und Ventile die elektronische Steuereinheit und der Elektromotor zu baulichen Einheiten zusammengefasst werden.

Die erfindungsgemäße Konstruktion ermöglicht eine einfache hydraulische Steuerung, ohne die Notwendigkeit, Pumpe und Filter groß zu dimensionieren. Zudem werden die Leerlaufverluste aufgrund der vorgesehenen gänzlichen Abschaltung der Pumpe im Nichtbremsbetrieb effektiv verringert. Aufgrund der Unabhängigkeit von der aktuellen Gelenkwellendrehzahl bzw. Fahrgeschwindigkeit erweist sich die erfindungsgemäße Anordnung als äußerst zuverlässig und ermöglicht zu jeder Zeit eine effektive Bremsung.

Ein weiterer Vorteil besteht darin, dass bei gemeinsamen Ölhaushalt mit dem Getriebe die Getriebekühlung abschaltbar ist. Bei getrenntem Ölhaushalt kann die Retarderkühlung nach der Bremsung gezielt beeinflusst werden.

Besonders vorteilhaft ist die Tatsache, dass keine fahrzeugseitige Pneumatikanlage erforderlich ist; es wird lediglich ein elektrischer Anschluss benötigt.

Außerdem ist der hydraulische Ventilaufbau einfach und erfordert aufgrund der geringen Anzahl von Ventilen und Kanälen relativ geringen Bauraum.

### Bezugszeichen

- 1: hydrodynamischer Retarder
- 2: regelbarer Elektromotor
- 3: Wärmetauscher
- 4: Einlassventil
- 5: Auslassventil
- 6: Steuer- und Regeleinheit
- 7: Temperatursensor
- 8: Temperatursensor
- 9: Drucksensor
- 10: Pumpe
- 11: Sumpf
- 12: Filter
- 13: Regelventil
- 14: Entleerventil
- 15: Schaltventil

## Patentansprüche

1. Hydrodynamischer Retarder für ein Kraftfahrzeug mit einem Kreislauf zur Steuerung des Retarders (1), der eine Hydraulikpumpe (10), einen Wärmetauscher (3), ein Einlassventil (4), ein Auslassventil (5) und eine Steuer- und Regeleinheit (6) enthält, **dadurch gekennzeichnet , dass** die Hydraulikpumpe (10) durch einen Elektromotor (2) antreibbar ist.

2. Hydrodynamischer Retarder nach Anspruch 1, **dadurch gekennzeichnet,dass** der Elektromotor (2) regelbar ist.

3. Hydrodynamischer Retarder nach Anspruch 2, **dadurch gekennzeichnet, dass** der Hydraulikpumpe (10) ein Filter (12) vorgeschaltet ist.

4. Hydrodynamischer Retarder nach einem der vorangehenden Ansprüche, **dadurch gekennzeichnet, dass** zur Regelung des Retarderregeldrucks ein Regelventil (13) vorgesehen ist.

5. Hydrodynamischer Retarder nach Anspruch 4, **dadurch gekennzeichnet, dass** die Regelung des Retarderregeldrucks auslassseitig oder einlassseitig erfolgt.

6. Hydrodynamischer Retarder nach einem der vorangehenden Ansprüche, **dadurch gekennzeichnet, dass** die Steuer- und Regeleinheit (6) mit Temperatursensoren (7, 8) verbunden ist, um die Temperatur im Fahrzeugkühlsystem und den Viskositätseinfluss bzw. Temperatureinfluss des Bremsmediums zu überwachen.

7. Hydrodynamischer Retarder nach einem der vorangehenden Ansprüche, **dadurch gekennzeichnet, dass** im Retarderkreislauf ein Drucksensor (9) zur Überwachung des Regeldrucks vorgesehen ist.

8. Hydrodynamischer Retarder nach einem der vorangehenden Ansprüche, **dadurch gekennzeichnet, dass** ein Entleerventil (14) vorgesehen ist, wodurch eine vollständige Entleerung des Retarders (1) im Nichtbremsbetrieb ermöglicht wird.

9. Hydrodynamischer Retarder nach Anspruch 8, **dadurch gekennzeichnet, dass** das Entleerventil (14) am Retarderauslass vorgesehen ist.

10. Hydrodynamischer Retarder nach einem der vorangehenden Ansprüche, **dadurch gekennzeichnet, dass** er über den Elektromotor (2) und/oder das Regelventil (13) ansteuerbar ist.

11. Hydrodynamischer Retarder nach Anspruch 10, **dadurch gekennzeichnet, dass** für den Fall, dass der Retarder (1) ausschließlich über den Elektromotor (2) ansteuerbar ist, ein Schaltventil (15) vorgesehen ist.

12. Hydrodynamischer Retarder nach Anspruch 10, **dadurch gekennzeichnet, dass** das Schaltventil (15) als 2/2 Wegeventil ausgebildet ist.

13. Hydrodynamischer Retarder nach einem der vorangehenden Ansprüche, **dadurch gekennzeichnet, dass** das Entleerventil (14) mit dem Auslassventil (5) zu einer Einheit zusammengefasst ist.

14. Hydrodynamischer Retarder nach einem der vorangehenden Ansprüche, **dadurch gekennzeichnet, dass** Einlassventil (4), Auslassventil (5) und Entleerventil (4) eine Einheit bilden.

15. Verfahren zur Steuerung eines hydrodynamischen Retarders mit einer Hydraulikpumpe (10), **dadurch gekennzeichnet,dass** die Hydraulikpumpe (10) durch einen Elektromotor (2) angetrieben wird.

16. Verfahren nach Anspruch 15, **dadurch gekennzeichnet,dass** der Elektromotor (2) über eine vorgesehene Steuer- und Regeleinheit (6) geregelt wird.

17. Verfahren nach Anspruch 15 oder 16, **dadurch gekennzeichnet, dass** zur Regelung des Retarderregeldrucks ein Regelventil (13) vorgesehen ist.

18. Verfahren nach Anspruch 17, **dadurch gekennzeichnet,dass** die Regelung des Retarderregeldrucks auslassseitig oder einlassseitig durchgeführt wird.

19. Verfahren nach einem der Ansprüche 15 bis 18, **dadurch gekennzeichnet, dass** der Retarder über den Elektromotor (2) in Kombination mit einem Schaltventil (15) oder in Kombination mit einem auslassseitig angeordneten Regelventil (13) angesteuert wird.

20. Verfahren nach Anspruch 19, **dadurch gekennzeichnet,dass** das Bremsmedium von der Hydraulikpumpe (10) an einer Stelle in den Hauptkreislauf gefördert wird, die zwischen einem vorgesehenen Wärmetauscher (3) und einem Einlassventil (4) angeordnet ist, wobei durch die gegenüberliegende Anordnung von Hydraulikpumpe (10) und Regelventil (13) im Nichtbremsbetrieb eine bestimmte Menge Bremsmedium durch den Wärmetauscher förderbar ist, ohne dass der Retarder (1) anspricht, so dass eine Nachkühlung des Bremsmediums ermöglicht wird.

21. Verfahren nach einem der Ansprüche 15 bis 20,
**dadurch gekennzeichnet, dass** eine vollständige Entleerung des Retarders (1) im Nichtbremsbetrieb über ein vorgesehenes Entleerventil (14) durchgeführt wird.
